# EUROPEAN PATENT SPECIFICATION

(11) **EP 0 825 965 B1**
(45) Date of publication and mention of the grant of the patent: **28.07.1999**
(21) Application number: 96916072.0
(22) Date of filing: 14.05.1996
(51) Int. Cl.: C03B 37/05, D04H 3/03, D04H 3/16

(54) **METHOD AND APPARATUS FOR THE MANUFACTURE OF MAN-MADE VITREOUS FIBRE PRODUCTS**
VERFAHREN UND VORRICHTUNG ZUM HERSTELLEN VON GLASFASERPRODUKTEN
PROCEDE ET APPAREIL DE FABRICATION DE PRODUITS EN FIBRE VITREUSE SYNTHETIQUE

(30) Priority: 15.05.1995 GB 9509813
(43) Date of publication of application: 04.03.1998
(73) Proprietor: Rockwool International A/S, 2640 Hedehusene (DK)
(72) Inventor: JENSEN, Carsten, DK-4000 Roskilde (DK); LARSEN, Peter, DK-2600 Glostrup (DK)
(74) Representative: Lawrence, Peter Robin Broughton
(86) International application number: EP9602067
(87) International publication number: WO9636573

(56) References cited:
- US-A- 3 045 279
- US-E- R E30 192

## Description

This invention relates to the manufacture of man-made vitreous fibre (MMVF) products by a centrifugal spinner technique, and apparatus for this.

MMVF products can be made by centrifugal spinners comprising one or more rotors that rotate fast and thereby form fibres. The rotors can rotate about a substantially vertical axis or a substantially horizontal axis. The mineral melt can be of the type which is generally known as a glass melt or can be of a type which is generally known as a stone, rock or slag melt.

One type of process which is well known, and is generally used for making glass fibres, comprises centrifugal spinning of fibres from a perforated rotor which spins about a substantially vertical axis. In such a process, melt can be poured into the centre of a perforated shallow cup which is spinning sufficiently fast to throw fibres out through the perforations. Air streams are usually provided to attenuate the fibres and carry them to a collector.

Such processes often provide a relatively narrow column of long fibres (often almost continuous fibres) extending downwardly to a substantially horizontal collector surface. The collector is often wider than the width of the column. A plurality of columns may be fed down on to a single collector, and/or the or each column may be moved across the collector surface so as to obtain a wide batt of fibres. For instance in U.S. Re 30,192 a process is described in which the fiberising rotor is oscillated so that the column of fibres swings back and forth across a wide collector positioned beneath the fiberising rotor. Various other ways of moving the relatively narrow column across the collector or of otherwise converting a narrow column into a wide batt are known in the art, for instance as described in US-A-3,134,145, 3,295,943, 3,546,898, 3,877,911 and 3,902,878, NL-A-137,395, and FR-A-2,014,207.

Other centrifugal spinning processes use rotors which rotate about a substantially horizontal axis. In such processes the melt is usually poured on to the outer surface of the rotor, or the first rotor in a series of rotors, and is thrown off the spinner as fibres. Spinners of this type are used particularly for the formation of fibres of rock, stone or slag. An air stream is provided from behind and around the spinning rotor or rotors to carry the fibres forward away from the rotor, and often also to assist in the formation of the fibres. The fibres are carried by the air stream towards an air-permeable collector through which suction is applied so as to collect the fibres on the collector as a web. The width of the curtain of fibres that is carried towards the collector is very much wider than the relatively narrow column formed by the conventional spinner that rotates about a vertical axis. Thus the curtain typically is more than a metre wide.

Generally there is a collecting chamber having side walls extending between a position approximately level with the front face of the housing and the collector. The dimensions of the housing and the arrangement of the rotor or rotors and the air supply is generally such that the web that is collected extends across the entire width of the collector.

Thus in conventional centrifugal spinners where the spinners rotate about a horizontal axis the spinner provides a web that is reasonably uniform and extends across substantially the entire width of the collector and the collecting chamber.

A single layer of this web may be used to provide the final batt of fibres that is required, but usually several layers of this web are laminated on one another, usually by a cross-lapping technique, in order to build up a batt of the desired thickness. This lamination will inevitably result in a batt which is even more uniform than the individual web layers from which it is formed.

It is often intended that the batt should provide heat insulation and/or fire resistance which is as high as possible while maintaining the density as low as possible. The normal ways of trying to achieve these objectives are by variations in the melt properties and by variations in the spinning properties. Such variations can influence the relationship between insulation and fire resistance on the one hand and density on the other, but they are rather complicated to put into effect. For instance variations in the rate, position or quality of the feed of the melt on to the rotor (or on the first rotor if there is more than one) can influence the results, but it is difficult to control such changes. For instance changing one of those features may necessitate making compensating changes in other features if the process is to be operated in an economic manner.

It would therefore be desirable to provide an easier way of modifying, and in particular improving, product quality obtainable from a centrifugal spinner comprising one or more rotors which spin about a substantially horizontal axis. In particular, it would be desirable to be able to do this without any significant interruption of the spinning process and without changing the melt supply or the rotors.

Apparatus according to the invention for making MMVF products from a mineral melt comprises a centrifugal spinner which comprises
a housing having a front,
a first rotatable rotor or a set of a first rotatable rotor and at least one subsequent rotatable rotor,
wherein the or each rotor is mounted on the housing for rotation about a substantially horizontal axis in front of the front face whereby melt which is poured on to the first rotor at a melt impact point can be thrown off as fibres or, in a set of rotors, can be thrown on to the or each subsequent rotor in series and can be thrown off the or each subsequent rotor, and optionally off the first rotor, as fibres, and
air supply means through the front of the housing,
and the apparatus includes means for oscillating the housing through an angle of 5 to 30° about a substantially vertical axis.

Thus in this apparatus there are means by which both the rotor axis or rotor axes and the air supply means can be oscillated through the desired angle about a substantially vertical axis.

A process according to the invention for making MMVF products utilising the described spinner comprises
pouring the melt on to the first rotating rotor at a melt impact point,
forming fibres off the first rotating rotor or, in a set of rotors, off the or each subsequent rotating rotor and optionally off the first rotor,
entraining the fibres in an air stream that is travelling from the air supply means towards an air permeable collector,
and collecting the fibres as a web on the collector by drawing air through the collector and
the housing is oscillated during the process through an oscillation angle of 5 to 30° about a substantially vertical axis of oscillation.

We surprisingly find that by oscillating the housing in the defined manner it is possible to achieve, in the final MMVF product, a significant improvement in properties at consistent density or equivalent properties at reduced density and, usually, both reduced density and improved properties. These results can be achieved in a simple manner without the need to make compensating changes in other features of the process. The ability to achieve the same or better properties at reduced density is very valuable since it means that the final product is made utilising lower amounts of melt.

There is generally a collecting chamber having means defining side walls extending between a position near (e.g., approximately level with) the front face of the housing and the air permeable collector. Generally the collector extends across substantially the entire width between the walls. The means defining the side walls can consist of air streams that are directed so as to confine the movement of the entrained fibres within a predetermined width, so that the air streams themselves can be considered to be the walls. However the means usually include solid elements, for instance of sheet metal or other material, that will confine the transverse movement of the fibres. Often air stream flow along the innerfaces of the solid side walls.

Generally the width between the walls and the width of the collector are such that a web is collected across the entire width of the collector, when the housing is stationary and is mounted perpendicular to the longitudinal axis of the chamber (i.e., its normal orientation). Thus the weight of fibres in the web in the two outermost quarters of the width of the collector is generally at least 50% of the weight of fibres in the two innermost quarters of the width. Preferably the web is substantially uniform and there are only relatively small variations in the weight per unit area of the web across the width of the collector when the housing is stationary. For instance the weight per unit area, on average, along the edge of the web produced when the spinner is stationary is normally at least 70%, and preferably at least 80% and usually at least 90% by weight of the weight per unit area in the centre of the collector.

The invention is thus in marked contrast to processes such as those described in U.S. Re 30192 in that the oscillation in those processes is essential for converting a narrow column into a wide web, whereas the benefits of the invention can be obtained, and preferably are obtained, when the web is wide even without the oscillation.

The final MMVF product is generally produced by compressing an uncompressed batt to one or more consolidation steps in conventional manner. The web that is collected may serve as this uncompressed batt so that the batt can be made directly in a single operation. Often, however, the web is cross lapped or otherwise laminated on itself so as to make the uncompressed batt, in conventional manner.

It is very surprising that the described oscillation of the housing does produce any beneficial effect on the final product in view of the fact that (a) the web is usually substantially uniform across its thickness even if there is no oscillation of the housing and (b) the web is normally cross lapped so that any non-uniformity in the web across its width would be expected to be cancelled out by the cross lapping of the web on itself. Subsequent to the making of the invention, we have tried to consider the reasons for this surprising improvement. One factor may be that during normal operation there can be a tendency for erratic transverse movement in the general direction of the air stream travelling from the spinner housing to the collector. It seems that temporary wall jet effects can occur whereby the air stream temporarily "clings" to one side of the chamber (when there are chamber side walls) before being released from that and then reverting either to a central flow or possibly to swing across the chamber and then "cling" to the opposite wall. The oscillation in the invention may prevent this uncontrolled transverse movement of the air stream.

In addition to improving the relationship between density and performance, the invention can also have the advantage of improving the uniformity of the deposition of fibres across the web and across the final batt. Thus by the invention it is easily possible to obtain a web and a final batt having little or no variation in density per unit area, on an average basis, across its width. Thus the variation may be, for instance, less than 10%.

The total angle of oscillation is generally at least 7° and is preferably at least 10° (e.g., 5° either side of the longitudinal axis). It is generally unnecessary for it to be more than about 25° and often it is not more than 20°. A range of around 14 to 20° (e.g., 7 to 10° either side of the longitudinal axis) is often suitable.

The oscillation is usually symmetrical but it can be an asymmetrical movement relative to a line through the oscillation axis and parallel with the production line symmetry line.

The oscillation is preferably conducted at a frequency of at least 0.05Hz, usually at least 0.1Hz. It can be conducted at values of up to, for instance, 2Hz but 1Hz is normally a convenient maximum. A frequency of around 0.3 to 0.6Hz is usually preferred. Usually the oscillation is applied continuously throughout the operation of the process, but if desired it may be applied only occasionally. If it is applied occasionally, the oscillation is preferably conducted at the frequencies discussed above for the time while it is applied.

The frequency of oscillation can be varied as required in accordance with process conditions both to vary the quality of the product that is obtained and to respond to variations in fibre production. Similarly, the angle of oscillation can be varied as required.

It is conventional to vary the rate of travel of the collector to compensate, at least to some extent, for variation in the rate of collection of fibres. Thus if the rate of collection of fibres increases, due to increased melt throughput, it is frequently appropriate to increase the rate of travel of the collector so as to reduce or substantially eliminate variations in the weight per unit area of the web. In the invention, the frequency of oscillation can be varied in accordance with the rate of travel of the collector in that the frequency can increase as the rate increases, and can decrease as the rate decreases. Preferably the frequency is varied in substantially direct proportion to the rate of travel of the collector so that one cycle of the oscillation corresponds to a substantially constant length of travel of the collector.

When forming fibres off a centrifugal spinner in which the or each rotor rotates about a substantially horizontal axis, the fibre-forming process can be significantly influenced by altering the position at which the melt is poured on to the first rotor, or the first rotor of a set of rotors. The melt flows vertically downwards on to the impact point. Varying the position of the impact point necessarily varies the angle between the tangent to the rotor at the impact point and the horizontal. If the axis of rotation of the first rotor is oscillating with respect to the melt supply, the melt impact point will oscillate with respect to the first rotor. In some processes this may be acceptable, particularly when the degree of oscillation is small, but it is generally preferred that the oscillation of the housing should be conducted substantially without movement of the melt impact point on the first rotor.

One way of ensuring that there is substantially no movement of the melt impact point is to arrange that the substantially vertical axis of oscillation extends substantially through the melt impact point. There will then only be little or no effect on the fibre-forming process by the oscillation. The melt will strike the first rotor at the same position irrespective of the particular time in the oscillation cycle and the only possible effect on fibre formation may be that the angle between the melt and the tangent to the rotor at the impact point may vary a few degrees during the oscillation cycle. This may have negligible impact on fibre formation.

If it is desired to minimise even this small change, this can be achieved by feeding the melt on to the first rotor from a melt plate which oscillates with the housing. Thus instead of feeding the melt from a fixed furnace or, more usually, a fixed melt plate on to the oscillating first rotor, the melt may be fed from the furnace on to a melt plate which oscillates with the first rotor. As a result, the position of the melt impact point and the angle at which the melt strikes the impact point on the first rotor remains substantially uniform, despite the oscillation of the housing. Conveniently, the melt is poured on to the melt plate at a position which is substantially on the axis of oscillation.

The spinner may have a single rotor but usually it is a cascade spinner which comprises a top rotor and at least one subsequent rotor. There can be a single subsequent rotor, in which event conditions are usually arranged such that fibres are formed off the top rotor and the subsequent rotor. Often, however, the cascade spinner comprises a top rotor and at least two subsequent rotors. In some instances the processes operated under conditions such that substantially no fibres are formed off the top rotor, but if desired the process can be conducted under conditions such that fibres are formed off the top rotor and off the two or more subsequent rotors. A preferred cascade spinner comprises a top rotor and three subsequent, fibre forming rotors. Preferably each rotor is driven by its own motor, coaxial with the rotor. The motors may be variable speed motors so that the speed of each rotor may be controlled independently.

The air stream that entrains the fibres may originate solely from air forced through air supply means in the housing front (and which thus oscillate with the housing) but there may also be additional air which is introduced through non-oscillating air supply means. For instance there may be fixed air orifices around the housing or a space around the housing through which air may be blown from behind or drawn by suction, due to an induction effect of the air from the air supply apertures in the housing and/or due to suction applied through the collector. If part of the air stream does originate from sources other than the air supply means in the housing, the proportions of housing-air and other air should be such that the direction of the housing air determines the direction of the total air stream. Thus oscillation of the air from the air supply means in the housing will preferably result in substantial oscillation of the total air stream even though additional air may be supplied to that stream.

The air supply means in the housing can comprise any means for supplying useful air flow through the front of the housing approximately parallel to the axis of the rotors, for instance so as to carry fibres away from the rotors and the housing. The front face of the housing can be an open framework such that the air supply means can be means for forcing air from within the housing out through this open front face. Generally, however, the air supply means comprise at least one annular air slot partially around and close to a rotor of which fibres are being formed. Often there is such a slot around and close to each rotor off which fibres are being formed.

Such a slot may be provided in an otherwise open front face, but generally is provided in a front face that is wholly or mainly closed. Thus the front face is generally solid except for apertures which serve as the air slots, apertures which allow from the passage of the axles of the rotor, and apertures that allow supplies of air or binder.

The or each slot generally extends only around that part of the rotor of which fibres are being formed. The or each slot is coaxial with its respective rotor and generally has an inner diameter substantially the same as the outer diameter of its respective rotor. Each slot discharges an air blast close to and substantially parallel to the periphery of the respective rotor with an axial component for carrying the MMVF fibres axially away from the periphery of that rotor. The rotation of the rotor will tend to impart a tangential component to the air blast exiting from a slot, but it is often preferred for the air blast to be provided with a tangential component, which may be substantially uniform or may vary from point to point around the rotor. If desired, the slot around the rotor may be made up of two adjacent coaxial slots having different internal diameters. Such a double slot, and other details of suitable air slots and means for imposing a tangential component on the air stream are described in more detail in WO92/06047.

The process is usually operated using a single cascade spinner providing fibres to the permeable collector, but if desired there can be two or more cascade spinners supplying the collector. When there are two or more spinners, they can oscillate independent of one another in phase or out of phase, and possibly even at different frequencies, or their oscillation can be synchronised so that they swing back and forth in parallel with one another.

Heat curable binder is generally introduced into the entrained stream of fibres in conventional manner. Often there are one or more sprays for binder mounted on the housing (or in the rotors on the housing) and this is convenient since the sprays will then oscillate with the entrained stream of fibres. If desired, however, some or all of the binder may be supplied from other binder supply points, which do not need to oscillate.

As mentioned, the web that is collected may be used as a batt that is then to be compressed, but more usually the web is cross-laminated upon itself by a conventional cross lapping procedure so as to form an uncompressed batt. This may then be subjected to one or more consolidation steps. These steps can be conventional for the particular products that are to be made, namely whether they are to be lightweight products (typically having a density in the range 20 to 60 kg/m³, or coarser products, typically having a density of at least 100 kg/m³, for instance up to 250 kg/m³). The lightweight products often have an average fibre diameter in the range 2.5 to 3.5µm and a binder content in the range 1 to 2%. They are useful as, for instance, heat insulation. The coarser products often have a fibre diameter in the range 3.5 to 5µm and a binder content in the range 2.5 to 3.5%. They can be useful as, for instance, rigid, structural insulation products.

In the accompanying drawings

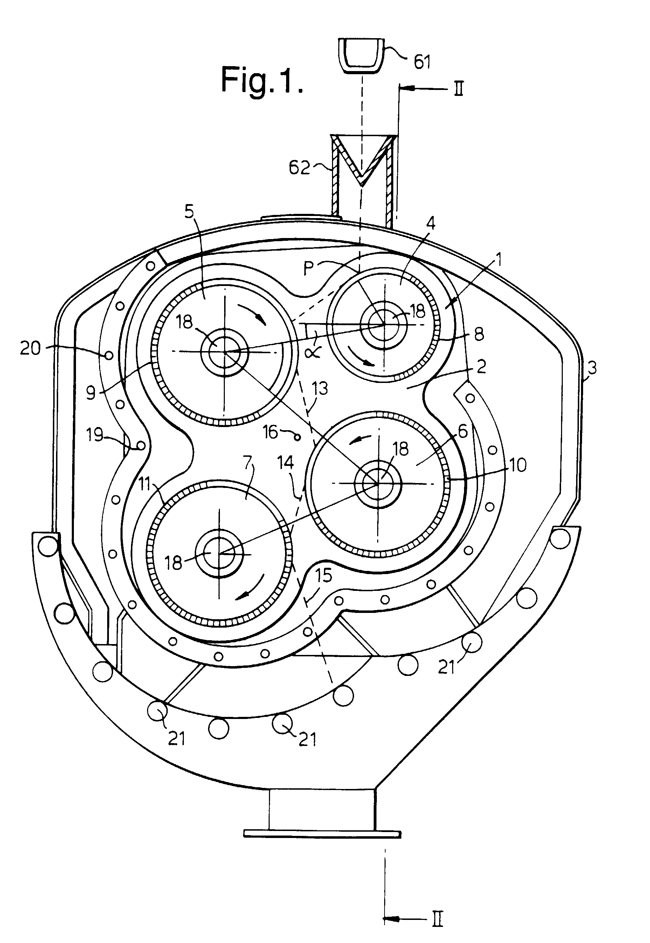

Figure 1 is a front view of fibre-forming apparatus of the invention

Figure 2 is a section on the line II - II of the apparatus shown in Figure 1.

Figure 3 is a diagrammatic plan view of the apparatus.

Figure 4 is a schematic representation of typical apparatus for collecting the fibres as a batt and consolidating the batt.

The apparatus includes a set 1 of rotors each mounted on the front face 2 of a housing 3. Each rotor is mounted on a driven axle that allows it to be rotated at high peripheral speed. The set consists of four rotors, a top rotor 4 that rotates anti-clockwise, a second fiberising rotor (i.e., a first subsequent rotor) 5 that rotates clockwise, a third fiberising rotor 6 that rotates anticlockwise, and a fourth fiberising rotor 7 that rotates clockwise. The bearings and drive mechanisms are not shown. Air slots 8, 9, 10 and 11 are associated with, respectively, the rotors 4, 5, 6 and 7, each slot extending around part only of the rotor. Generally each slot extends around at least 1/3 of the periphery of its associated rotor, generally around the outer part of the set of rotors. Generally it extends around not more than 2/3 or 3/4 of the periphery.

Each slot leads from an air supply chamber within the housing. The whole set of rotors is mounted to pivot about a pivot axis 16 as a result of appropriate adjustment of supports 71. The extent of pivoting typically is such that the angle α between the horizontal and a line connecting the axis of each of rotors 4 and 5 can be adjusted through a range of at least 10°, for instance between a value that may be as low as zero or 10° to a value which may be as high as 30 or 40°.

Binder may be ejected from binder-supply sprays 18 coaxial with each of the rotors and in the front face of each rotor and/or through sprays 20 fed by binder supplies 19 arranged around the rotors or located in other suitable positions in conventional manner. Additional air may be forced through various air orifices 21.

The top rotor in the invention typically has a diameter in the range 100 to 250mm, often around 150 to 200mm. Each subsequent rotor in the invention generally has a diameter in the range 150 to 400mm, usually 220 to 350mm. For instance the first subsequent rotor (rotor 5) may have a diameter in the range 220 to 300mm whilst the remaining subsequent rotors may have a diameter in the range 300 to 350mm.

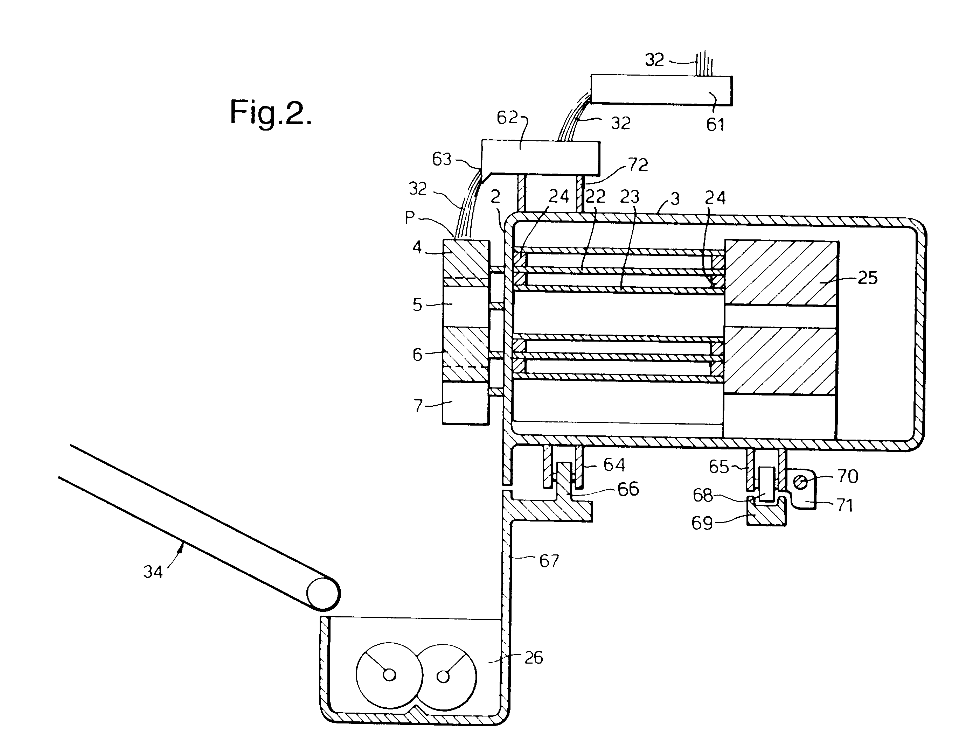

Referring to Figure 2, the housing 3 encloses the motor and drive shaft for each of the rotors. For instance rotor 4 is mounted on a shaft 22 which is enclosed within a sleeve 23 and bearings 24 and which is positively driven by a frequency controlled motor 25 having means, not shown, for varying the speed of rotation of the shaft 22 and the rotor 4. The air supply and binder supply is not shown in Figure 2.

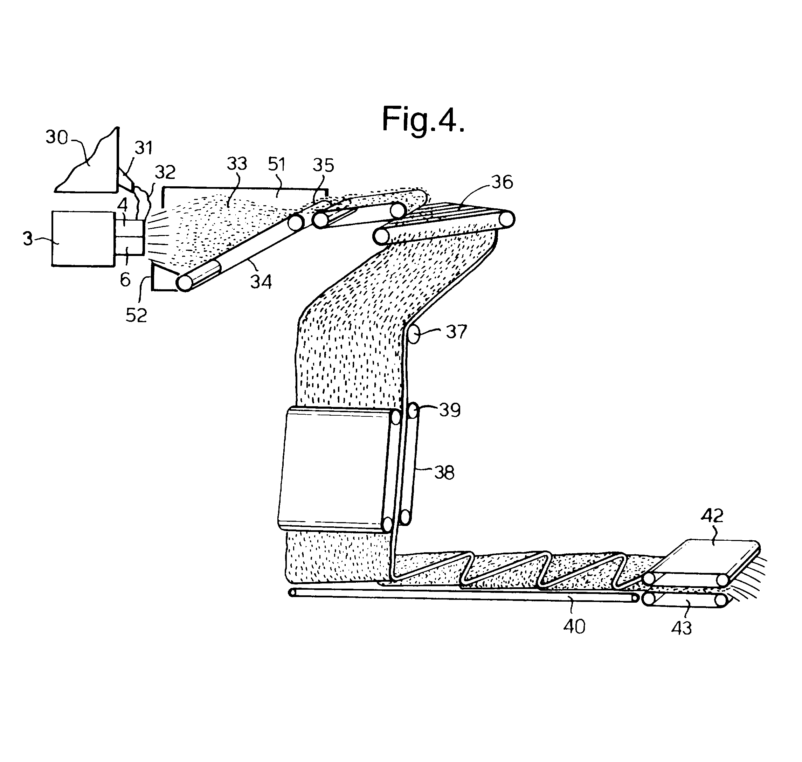

The total production line is shown in Figure 4 and typically comprises a furnace 30 having a melt outlet 31 that pours the melt 32 on to rotor 4 in the set of rotors mounted on the housing 3. Some of the melt is thrown off the rotor 4 as fibres or as shot, but most is thrown along path 12 on to rotor 5 which is rotating the opposite direction from rotor 4. Some is thrown off rotor 5 as fibres generally in the area of the slot 9 but the remainder is thrown along path 13 on to counter-rotating rotor 6. Some is thrown off as fibres in the general area of slot 10 while the remainder is thrown along path 14 on to counter-rotating rotor 7. A significant amount is fiberised in the general direction 15 but other melt is fiberised around the remainder of the surface of rotor 7. Shot collects in the pit 26.

The fibres and binder sprayed into the fibres are carried forward as shown at 33 and are collected on a porous inclined screen 34 which is in the base of a collection chamber (not shown). The resultant web 35 is fed from this screen to a cross lapping arrangement comprising a turn-over device 37 by which the web is turned through a right angle, over a roll 37 and between cross lapping belts 38 which reciprocate about the axes of the upper rolls 39, thereby cross lapping the web into a batt carried on a conveyor 40 to the nip between a downwardly inclined upper conveyor (not shown) and the lower conveyor 40, by which the web 39 is gradually compressed and is then calendered between calendering belts 42 and 43. By varying the gap in the nip and between the belts 42 and 43 and by varying the rate of travel of the web and the batt, it is easily possible to vary the density of the product emerging from between the belts 42 and 43.

This product may be passed through an oven to cure the binder, in conventional manner.

In conventional apparatus, the housing is located coaxial with a collecting chamber 50 which has side walls 51 which extend from end walls 52 level with the rotors 4 and 5 (and 6 and 7) mounted in the spinner housing 3. The base of the collection chamber is defined by the upwardly inclined conveyor 34, which has the same width as the collection chamber.

In conventional apparatus, the spinner housing 3 is arranged substantially coaxial with the chamber 50. For instance the spinner may be mounted on the axis shown by the line A, and this is parallel with the axis of the chamber shown by the line B. The fibres are thrown and carried forward from the spinner in a somewhat conical configuration as shown approximately by the line F. As is conventional, the fibres are therefore deposited on the conveyor substantially uniformly across the entire width of the conveyor.

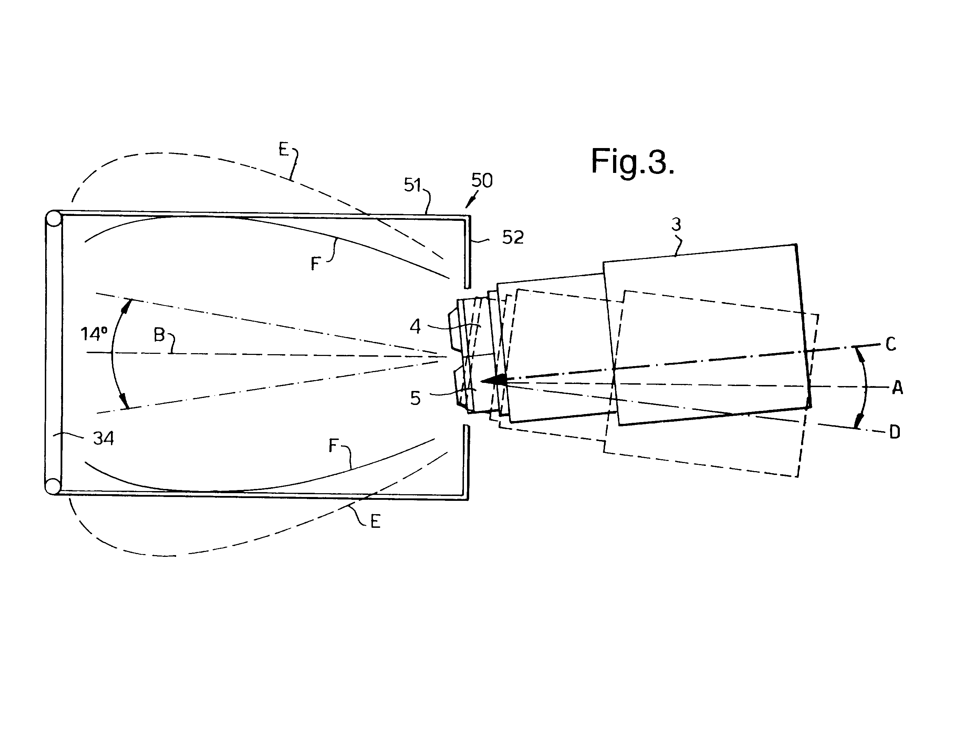

In the invention, the spinner housing is oscillated between a position in which its axis is along the line C and a position in which it is along the line D, the angle between the lines C and D being, for instance, 14°. The dashed line E indicates the outermost region where the fibres might be expected to fall in the absence of the collecting chamber, due to the oscillation of the spinner, but the suction through collector 34 and the consequential air flow through the chamber 50 results in the fibres being substantially uniformly distributed across the width of the chamber. One extreme position of the spinner is shown in solid lines in Figure 3 and the other in dashed lines.

Melt 32 flows into a gutter 61 from a cupola or other furnace. It overflows from the gutter 61 into a V-shaped melt plate 62 having an outlet point 63 from which it discharges down onto an impact point P on rotor 4.

The rotor housing 3 can be mounted on appropriate front supports 64 and rear supports 65. For instance supports 64 may be mounted on a pivot 66 which is securely mounted with respect to surrounding apparatus 67.

The rear supports 65 carry a wheel 68 that can run in a horizontal arcuate rail 69. A reciprocating, horizontally mounted, piston 70 acts on a flange 71 to cause the whole housing to pivot about the pivot 66, with the wheel 68 running in the arcuate track 69. Accordingly, the axis of oscillation of this arrangement is vertically through the pivot 66. In order that the melt discharge point P does not move significantly across the rotor 4 with the oscillation of the housing, the melt plate 62 is rigidly fixed to the housing by supports 72. The top of the melt plate 62 is made sufficiently wide that the melt 32 from the gutter 61 always discharges into the melt plate irrespective of its position during the rotation.

In another embodiment, the housing can be caused to rotate about an axis which extends substantially vertically through the melt impact point P. For instance the pivot assembly 66 can be replaced by an appropriate wheel and rail arrangement coupled with the wheel and rail arrangement 68, 69, 70 and 71, so as to allow oscillation of the entire assembly about the point P. When this is done, it is not essential for the melt plate to be fixed with respect to the housing.

In a typical apparatus, the fiberising rotors 5, 6 and 7 have diameters of 250, 330 and 330mm respectively and have peripheral velocities (metres per second) of 72, 111 and 120 metres respectively. Air is forced out of slots 8 to 11 across the surfaces of the rotors at a total air velocity (measured by a hot wire technique) of 140m/s. Blades in the slots impart a tangential component to the air.

5 tons per hour melt is poured on to the rotor 4. Binder is applied to the fibres in conventional manner. A web is formed on the collector 34 at a rate of 4.5 tons per hour including 1.5% binder. The web was laminated on itself and consolidated in conventional manner to give slabs having a density of 30kg/m³.

Various samples were taken from different points of the web and the slab and the properties were recorded. This was done for a conventional process where the spinner housing was stationary and for a process where the housing oscillated at a frequency of 0.4Hz through a total of 10°.

It was found that the Sigma value (tensile strength) increased from 10.6kN/m² to 12.8kN/m², showing a 20.7% improvement due to oscillation. Standard deviation in ignition loss changes from 0.28 to 0.13, representing a 53.5% improvement. Standard deviation in product density was reduced from 6.9kg/m³ to 5.6kg/m³, representing an 18.8% improvement.

## Claims

1. A process for making MMVF products from a mineral melt using a centrifugal spinner which comprises
a housing (3) having a front (2),
a first rotating rotor (4) or a set of rotating rotors consisting of a first rotor and at least one subsequent rotor (5, 6, 7),
wherein the or each rotor is mounted on the housing (3) for rotation about a substantially horizontal axis in front of the front (2) whereby melt (32) poured on to the first rotor (4) is thrown off as fibres or, in a set of rotors, is thrown on to the or each subsequent rotor in sequence and is thrown off the or each subsequent rotor, and optionally off the first rotor, as fibres, and
air supply means (8, 9, 10, 11) through the front (2) of the housing (3),
and in which the process comprises
pouring the melt on to the first rotating rotor (4) at a melt impact point (P),
forming fibres off the first rotating rotor (4) or, in a set of rotors, off the or each subsequent rotating rotor (5, 6, 7) and optionally off the first rotor (4),
entraining the fibres in an air stream that is travelling from the air supply means (8, 9, 10, 11) towards an air permeable collector (34),
and collecting the fibres as a web (35) on the collector (34) by drawing air through the collector (34)
characterised in that the housing (3) is oscillated during the process through an oscillation angle of 5 to 30° about a substantially vertical axis of oscillation.

2. A process according to claim 1 in which the width of the collector (34) is such that, if the housing would be stationary and arranged with its front face substantially perpendicular to the longitudinal axis of the collector, the web (35) is substantially uniform across the entire width of the collector (34).

3. A process according to claim 1 or claim 2 in which the web (35) is cross lapped to form an uncompressed batt, and the batt is then consolidated.

4. A process according to any preceding claim in which the air supply means (8,9,10,11) comprise at least one annular air slot which extends at least partially around, and close to, the rotor (5) or a rotor (4,5,6,7) off which fibres are being formed.

5. A process according to any preceding claim in which the spinner is a cascade spinner which comprises a first rotor (4) and two or three subsequent rotors (5,6,7).

6. A process according to any preceding claim in which the oscillation angle is from 10 to 25°, preferably 14 to 20°.

7. A process according to any preceding claim in which the frequency of oscillation is 0.1 to 1Hz, preferably 0.3 to 0.6Hz.

8. A process according to any preceding claim in which the collector (34) carries the web (35) away from the spinner, the rate of travel of the collector is varied to compensate for variations in the rate of collection of fibres as a web (35) on the collector, and the frequency of oscillation is varied in accordance with variations in the rate of travel of the collector.

9. A process according to any preceding claim in which the oscillation of the housing (3) is conducted substantially without movement of the melt impact point (P).

10. A process according to claim 9 in which the axis of oscillation extends substantially through the melt impact point (P).

11. A process according to claim 9 in which the melt is poured on to the first rotor (4) at a substantially stationary melt impact point (P) off a melt plate (62) which oscillates with the housing.

12. Apparatus for making MMVF products from a mineral melt comprising a centrifugal spinner which comprises
a housing (3) having a front (2),
a first rotor (4) or a set of a first rotor (4) and at least one subsequent rotor (5, 6, 7),
wherein the or each rotor is mounted on the housing (3) for rotation about a substantially horizontal axis in front of the front (2) whereby melt (32) which is poured on to the first rotor (4) at a melt impact point (P) can be thrown
off as fibres or, in a set or rotors, can be thrown on to the or each subsequent rotor (5,6,7) in series and can be thrown off the or each subsequent rotor, and optionally off the first rotor, as fibres, and
air supply means (8, 9, 10, 11) through the front (2) of the housing (3),
characterised in that
the apparatus includes means (64, 66, 65, 68, 69, 70, 71) for oscillating the housing (3) through an angle of 5 to 30° about a substantially vertical axis.

13. Apparatus according to claim 12 in which the housing (3) is mounted for oscillation through a substantially vertical axis which extends substantially through the melt impact point (P).

14. Apparatus according to claim 12 in which there is a melt plate (62) mounted for oscillation with the housing (3) and positioned to discharge melt on to a melt impact point (P) which is substantially stationary with respect to the first rotor (4) during the oscillation.

15. Apparatus according to any of claims 12 to 14 in which the centrifugal spinner comprises a first rotor (4) and two or three subsequent rotors (5,6,7).

16. Apparatus according to any of claims 12 to 15 in which the air supply means (8,9,10,11) comprise at least one annular air slot which extends at least partially around, and close to, at least one rotor (4,5,6,7) off which fibres are being formed.

## Patentansprüche

1. Verfahren zur Herstellung von MMVF-Produkten aus einer mineralischen Schmelze unter Verwendung einer Zentrifugal-Schleudereinrichtung, welche umfaßt
ein Gehäuse (3) mit einer Stirnseite (2),
einen ersten rotierenden Rotor (4) oder einen Satz rotierender Rotoren, welcher aus einem ersten Rotor und mindestens einem nachfolgenden Rotor (5, 6, 7) besteht,
worin der oder jeder Rotor zur Rotation um eine im wesentlichen horizontale Achse vor der Stirnseite (2) an dem Gehäuse (3) montiert ist, wodurch auf den ersten Rotor (4) gegossene Schmelze (32) als Fasern abgeschleudert wird oder, bei einem Satz Rotoren, nacheinander auf den oder jeden nachfolgenden Rotor geschleudert wird und von dem oder jedem nachfolgenden Rotor und gegebenenfalls von dem ersten Rotor als Fasern abgeschleudert wird, und Luftzufuhr-Einrichtungen (8, 9, 10, 11) durch die Stirnseite (2) des Gehäuses (3),
und worin das Verfahren umfaßt
das Gießen der Schmelze auf den ersten rotierenden Rotor (4) an einem Schmelzen-Aufprallpunkt (P),
das Abschleudern von Fasern von dem ersten rotierenden Rotor (4) oder, bei einem Satz Rotoren, von dem oder jedem nachfolgenden rotierenden Rotor (5, 6, 7) und gegebenenfalls von dem ersten Rotor (4),
das Mifführen der Fasern in einem Luftstrom, der von den Luftzufuhr-Einrichtungen (8, 9, 10, 11) zu einer luftdurchlässigen Sammeleinrichtung (34) strömt,
und das Sammeln der Fasern als Bahn (35) auf der Sammeleinrichtung (34) durch Abzug von Luft durch die Sammeleinrichtung (34),
dadurch gekennzeichnet, daß das Gehäuse (3) während des Verfahrens in einem Schwingungswinkel von 5 bis 30° um eine im wesentlichen vertikale Schwingungsachse in Schwingung versetzt wird.

2. Verfahren nach Anspruch 1, worin die Breite der Sammeleinrichtung (34) derart ist, daß sich die Bahn (35), wenn das Gehäuse stationär und mit seiner Stirnseite im wesentlichen senkrecht zu der Längsachse der Sammeleinrichtung angeordnet wäre, im wesentlichen gleichmäßig über die gesamte Breite der Sammeleinrichtung (34) erstreckt.

3. Verfahren nach Anspruch 1 oder Anspruch 2, worin die Bahn (35) kreuzweise überlappt, um eine unverdichtete Matte zu bilden, und die Matte dann konsolidiert wird.

4. Verfahren nach irgendeinem vorhergehenden Anspruch, worin die Luftzufuhr-Einrichtungen (8, 9, 10, 11) mindestens einen ringförmigen Luftschlitz umfassen, welcher zumindest teilweise um und nahe dem Rotor (5) oder einem Rotor (4, 5, 6, 7) verläuft, von welchem Fasern abgeschleudert werden.

5. Verfahren nach irgendeinem vorhergehenden Anspruch, worin die Schleudereinrichtung eine Kaskaden-Schleudereinrichtung ist, welche einen ersten Rotor (4) und zwei oder drei nachfolgende Rotoren (5, 6, 7) umfaßt.

6. Verfahren nach irgendeinem vorhergehenden Anspruch, worin der Schwingungswinkel 10 bis 25°, vorzugsweise 14 bis 20°, beträgt.

7. Verfahren nach irgendeinem vorhergehenden Anspruch, worin die Schwingungsfrequenz 0,1 bis 1 Hz, vorzugsweise 0,3 bis 0,6 Hz, beträgt.

8. Verfahren nach irgendeinem vorhergehenden Anspruch, worin die Sammeleinrichtung (34) die Bahn (35) von der Schleudereinrichtung wegbefördert, die Laufgeschwindigkeit der Sammeleinrichtung variiert wird, um Schwankungen der Sammelgeschwindigkeit von Fasern als Bahn (35) auf der Sammeleinrichtung auszugleichen, und die Schwingungsfrequenz in Einklang mit den Änderungen der Laufgeschwindigkeit der Sammeleinrichtung variiert wird.

9. Verfahren nach irgendeinem vorhergehenden Anspruch, worin die Schwingung des Gehäuses (3) im wesentlichen ohne Bewegung des Schmelzen-Aufprallpunktes (P) erfolgt.

10. Verfahren nach Anspruch 9, worin die Schwingungsachse im wesentlichen durch den Schmelzen-Aufprallpunkt (P) hindurch verläuft.

11. Verfahren nach Anspruch 9, worin die Schmelze von einem Schmelzteller (62), der mit dem Gehäuse schwingt, an einem im wesentlichen stationären Schmelzen-Aufprallpunkt (P) auf den ersten Rotor (4) gegossen wird.

12. Vorrichtung zur Herstellung von MMVF-Produkten aus einer mineralischen Schmelze, umfassend eine Zentrifugal-Schleudereinrichtung, welche umfaßt
ein Gehäuse (3) mit einer Stirnseite (2),
einen ersten Rotor (4) oder einen Satz aus einem ersten Rotor (4) und mindestens einem nachfolgenden Rotor (5, 6, 7),
worin der oder jeder Rotor zur Rotation um eine im wesentlichen horizontale Achse vor der Stirnseite (2) an dem Gehäuse (3) montiert ist, wodurch Schmelze (32), die an einem Schmelzen-Aufprallpunkt (P) auf den ersten Rotor (4) gegossen wird, als Fasern abgeschleudert werden kann oder, bei einem Satz Rotoren, nacheinander auf den oder jeden nachfolgenden Rotor (5, 6, 7) geschleudert und von dem oder jedem nachfolgenden Rotor und gegebenenfalls von dem ersten Rotor als Fasern abgeschleudert werden kann, und
Luftzufuhr-Einrichtungen (8, 9, 10, 11) durch die Stirnseite (2) des Gehäuses (3),
dadurch gekennzeichnet, daß
die Vorrichtung Einrichtungen (64, 66, 65, 68, 69, 70, 71) zum In-Schwingung-Versetzen des Gehäuses (3) in einem Winkel von 5 bis 30° um eine im wesentlichen vertikale Achse umfaßt.

13. Vorrichtung nach Anspruch 12, worin das Gehäuse (3) zur Schwingung um eine im wesentlichen vertikale Achse montiert ist, welche im wesentlichen durch den Schmelzen-Aufprallpunkt (P) hindurch verläuft.

14. Vorrichtung nach Anspruch 12, worin ein Schmelzteller (62) zur Schwingung mit dem Gehäuse (3) montiert und so positioniert ist, daß er Schmelze auf einen Schmelzen-Aufprallpunkt (P) ausbringt, welcher während der Schwingung in bezug auf den ersten Rotor (4) im wesentlichen stationär ist.

15. Vorrichtung nach irgendeinem der Ansprüche 12 bis 14, worin die Zentrifugal-Schleudereinrichtung einen ersten Rotor (4) und zwei oder drei nachfolgende Rotoren (5, 6, 7) umfaßt.

16. Vorrichtung nach irgendeinem der Ansprüche 12 bis 15, worin die Luftzufuhr-Einrichtungen (8, 9, 10, 11) mindestens einen ringförmigen Luftschlitz umfassen, welcher zumindest teilweise um und nahe mindestens einem Rotor (4, 5, 6, 7) verläuft, von welchem Fasern abgeschleudert werden.

## Revendications

1. Procédé pour fabriquer des produits MMVF (fibres vitreuses artificielles) à partir d'une masse minérale en fusion, en utilisant un dispositif de formation de fibres par centrifugation qui comporte:
un boîtier (3) présentant une face frontale (2),
un premier rotor tournant (4) ou un jeu de rotors tournants constitué d'un premier rotor et d'au moins un rotor (5, 6, 7) suivant,
dans lequel le ou chaque rotor est monté sur le boîtier (3) de manière à tourner autour d'un axe sensiblement horizontal, en avant de la face frontale (2), de telle sorte qu'une matière en fusion (32) versée sur le premier rotor (4) est projetée sous la forme de fibres ou, dans le cas d'un jeu de rotors, est projetée sur le rotor suivant ou successivement sur chaque rotor suivant, et est projetée hors du ou de chaque rotor suivant, et facultativement hors du premier rotor, sous la forme de fibres, et
des moyens (8, 9, 10, 11) de fourniture d'air à travers la face frontale (2) du boîtier (3),
et dans lequel le procédé comporte les étapes consistant à:
verser la matière en fusion sur le premier rotor tournant (4) en un point (P) d'impact de la matière en fusion,
former des fibres à la sortie du premier rotor tournant (4) ou, dans le cas d'un jeu de rotors, du ou de chaque rotor tournant suivant (5, 6, 7), et facultativement du premier rotor (4),
entraîner les fibres dans un courant d'air qui se déplace depuis les moyens (8, 9, 10, 11) de fourniture d'air en direction d'un collecteur (34) perméable à l'air,
et recueillir les fibres sous la forme d'une nappe (35) sur le collecteur (34) en aspirant l'air à travers le collecteur (34),
caractérisé en ce que le boîtier (3) est mis en oscillation, pendant le procédé, sur un angle d'oscillation de 5 à 30°, autour d'un axe d'oscillation sensiblement vertical.

2. Procédé selon la revendication 1, dans lequel la largeur du collecteur (34) est telle que, si le boîtier restait stationnaire et était agencé avec sa face frontale sensiblement perpendiculaire à l'axe longitudinal du collecteur, la nappe (35) serait sensiblement uniforme sur toute la largeur du collecteur (34).

3. Procédé selon la revendication 1 ou la revendication 2, dans lequel la nappe (35) est rabattue transversalement pour former une galette non comprimée, et la galette est ensuite tassée.

4. Procédé selon l'une quelconque des revendications précédentes, dans lequel les moyens (8, 9, 10, 11) de fourniture d'air comportent au moins une fente annulaire pour l'air, qui s'étend au moins en partie autour et à proximité étroite du rotor (5) ou d'un rotor (4, 5, 6, 7) à la sortie duquel les fibres sont formées.

5. Procédé selon l'une quelconque des revendications précédentes, dans lequel le dispositif de formation de fibres est un dispositif de formation de fibres en cascade qui comporte un premier rotor (4) et trois rotors (5, 6, 7) suivants.

6. Procédé selon l'une quelconque des revendications précédentes, dans lequel l'angle d'oscillation est de 10 à 25°, de préférence de 14 à 20°.

7. Procédé selon l'une quelconque des revendications précédentes, dans lequel la fréquence d'oscillation est de 0,1 à 1 Hz, de préférence de 0,3 à 0,6 Hz.

8. Procédé selon l'une quelconque des revendications précédentes, dans lequel le collecteur (34) transporte la nappe (35) loin du dispositif de formation de fibres, la vitesse de déplacement du collecteur varie de manière à compenser les variations de la vitesse de collecte des fibres sous la forme d'une nappe (35), sur le collecteur, et la fréquence des oscillations varie en fonction des variations de la vitesse de déplacement du collecteur.

9. Procédé selon l'une quelconque des revendications précédentes, dans lequel l'oscillation du boîtier (3) est réalisée sensiblement sans déplacement du point (P) d'impact de la matière en fusion.

10. Procédé selon la revendication 9, dans lequel l'axe d'oscillation passe sensiblement par le point (P) d'impact de la matière en fusion.

11. Procédé selon la revendication 9, dans lequel la matière en fusion est versée sur le premier rotor (4) en un point (P) d'impact de matière en fusion sensiblement stationnaire, à partir d'un plateau (62) à matière en fusion qui oscille avec le boîtier.

12. Appareil pour fabriquer des produits MMVF à partir d'une masse minérale en fusion, comportant un dispositif de formation de fibres centrifuge qui comporte:
un boîtier (3) présentant une surface frontale (2),
un premier rotor tournant (4) ou un jeu de rotors tournants constitué d'un premier rotor (4) et d'au moins un rotor suivant (5, 6, 7),
dans lequel le ou chaque rotor est monté sur le boîtier (3) de manière à tourner autour d'un axe sensiblement horizontal, en avant de la surface frontale (2), de telle sorte que de la matière en fusion (32) qui est versée sur le premier rotor (4) en un point (P) d'impact de matière en fusion peut être projetée sous la forme de fibres ou, dans le cas d'un jeu de rotors, peut être projetée sous la forme de fibres sur le, ou successivement sur chaque rotor (5, 6, 7) suivant, et peut être projetée hors du, ou de chaque rotor suivant, et facultativement hors du premier rotor, et
des moyens (8, 9, 10, 11) de fourniture d'air à travers la face frontale (2) du boîtier (3),
caractérisé en ce que
l'appareil comprend des moyens (64, 66, 65, 68, 69, 70, 71) pour faire osciller le boîtier (3) sur un angle de 5 à 30° autour d'un axe sensiblement vertical.

13. Appareil selon la revendication 12, dans lequel le boîtier (3) est monté de manière à pouvoir osciller autour d'un axe sensiblement vertical qui passe sensiblement par le point (P) d'impact de la matière en fusion.

14. Appareil selon la revendication 12, dans lequel est prévu un plateau (62) à matière en fusion monté de manière à osciller avec le boîtier (3) et positionné de manière à décharger la matière en fusion en un point (P) d'impact de matière en fusion qui, pendant l'oscillation, est sensiblement stationnaire par rapport au premier rotor (4).

15. Appareil selon l'une quelconque des revendications 12 à 14, dans lequel le dispositif de formation de fibres centrifuge comporte un premier rotor (4) et deux ou trois rotors suivants (5, 6, 7).

16. Appareil selon l'une quelconque des revendications 12 à 15, dans lequel les moyens (8, 9, 10, 11) de fourniture d'air comportent au moins une fente annulaire pour l'air, qui s'étend au moins en partie autour et à proximité étroite du rotor (4, 5, 6, 7) au moins présent à la sortie duquel les fibres sont formées.
